# EUROPÄISCHE PATENTSCHRIFT

(11) **EP 1 336 581 B1**
(45) Veröffentlichungstag und Bekanntmachung des Hinweises auf die Patenterteilung: **13.04.2005**
(21) Anmeldenummer: 03002653.8
(22) Anmeldetag: 11.02.2003
(51) Int. Cl.: B65G 65/48

(54) **Schüttgutlagerung mit Obenentnahme**
Container for bulk materials, whereby said container is emptied from above
Conteneur pour materiaux en vrac avec vidange par le haut

(30) Priorität: 18.02.2002 DE 10206686
(43) Veröffentlichungstag der Anmeldung: 20.08.2003
(73) Patentinhaber: Schwäbische Hüttenwerke GmbH, 73433 Aalen-Wasseralfingen (DE)
(72) Erfinder: Schröder, Klaus-Sweerich, 73431 Aalen (DE)
(74) Vertreter: Schwabe - Sandmair - Marx

(56) Entgegenhaltungen:
- CH-A- 293 339
- DE-A- 1 933 337
- DE-C- 443 502
- FR-A- 1 417 266
- FR-A- 1 543 395
- FR-A- 2 294 944
- US-A- 4 721 425

## Beschreibung

Die Erfindung betrifft eine Lagervorrichtung für in sich verzahnendes Schüttgut und hier insbesondere einen Austrageteil, der dem Austragen des Schüttguts aus einem Lagerbehälter der Lagervorrichtung dient. Desweiteren betrifft die Erfindung auch ein Verfahren für das Austragen von in sich verzahntem Schüttgut aus einem Lagerbehälter. Die Erfindung ist besonders vorteilhaft für den Austrag aus Lagerbehältern mit großer Lagerkapazität mit entsprechend stark verzahnten Schüttgutpartikeln.

Schüttgut, das in einem größeren Umfang Schüttgutpartikel enthält oder ausschließlich aus Schüttgutpartikeln gebildet wird, die zu einem Ineinanderverzahnen neigen, ist problematisch insbesondere in Bezug auf den Austrag aus dem Lagerbehälter. In dieser Weise problematische Schüttgüter sind beispielsweise Hausmüll und Späne für OSB-Platten (Oriented Strand Boards) und andere flächige Schüttgüter. Mit steigender Füllhöhe steigt der Druck im unteren Bereich des Lagerbehälters stark an, so dass die einzelnen Schüttgutpartikel sehr große Haftkräfte untereinander erzeugen und ihre gegenseitige Verzahnung deshalb nur mit großer Kraft gelöst werden kann.

Herkömmliche Austragevorrichtungen tragen die Schüttgüter aus dem Lagerbehälter von unten aus dem Schüttguthaufen aus. Bekannt sind beispielsweise Umlaufschnecken, die den Austrag mittels rotierender Schnecke besorgen, die mit Aufreißem auf ihren Schneckenflügeln das Schüttgut aus dem Schüttguthaufen herausreißt. Desweiteren ist das Herausreißen und Austragen der Schüttgutpartikel mittels Schlepparmen bekannt. Die herkömmlichen Austragevorrichtungen sind bei in sich verzahnten Schüttgütern nur für kleine Lagerbehälter geeignet, da mit der Füllhöhe im Lagerbehälter die Haftkräfte der Schüttgutpartikel untereinander größer werden.

Für OSB-Späne (strands) werden Bandbunker eingesetzt, bei denen das Schüttgut auf ein Förderband geworfen wird, welches das Schüttgut langsam in eine Reihe von Stachelwellen schiebt. Neu hinzukommende strands werden mittels eines Rückführrechens in Kettenausführung in den hinteren Bereich des Bandbunkers verzogen. Der derzeitige Entwicklungsstand begrenzt die OSB-Bunker auf ein Füllvolumen von etwa 500 m³. Die Konstruktion der Rückführrechen in Kettenausführung begrenzt die Länge des Bunkers, da die Kettenzuglast mit der Länge des Bunkers steigt. Auch die Höhe des Bunkers ist begrenzt. Höhere Bunker sind ungeeignet, da die Verdichtung der Schüttgutpartikel unten auf dem Band so groß würde, dass die Stachelwellen nicht mehr in der Lage wären, die strands aus dem Schüttguthaufen herauszureißen. Bereits bei bestehenden Lagervorrichtungen werden die Schüttgutpartikel durch die Stachelwellen stark zerstört, so dass die derzeitigen OSB-Bandbunker in Bezug auf ihr Fördervolumen und eine schonende Behandlung der Schüttgutpartikel nicht optimal sind.

Lagervorrichtung mit von oben in das Schüttgut eingreifenden Abtragseinrichtungen sind aus der DE 443 502, der DE 19 33 337, der CH 293339, der FR 1 543 395, der FR 1 417 266, der FR 2 294 944 und der US 4,721,425 bekannt. Die Abtragseinrichtung der US 4,721,425 ist als Kratzförderer gebildet.

Es ist eine Aufgabe der Erfindung, in einem Lagerbehälter aufgenommenes Schüttgut, das in sich verzahnt ist, schonend aus dem Lagerbehälter auszutragen, um die Lagerkapazität von Lagerbehältern für in sich verzahnendes Schüttgut vergrößern zu können.

Die Erfindung betrifft eine Lagervorrichtung für in sich verzahnendes Schüttgut, die einen Lagerbehälter für das Schüttgut, eine Eintragsvorrichtung zum Befüllen des Lagerbehälters mit dem Schüttgut und eine Abtragseinrichtung mit in dem Lagerbehälter angeordneten Stachelwellen umfasst. Die Stachelwellen sind um ihre Drehachsen drehangetrieben und greifen kämmend ineinander, um das Schüttgut für den Austrag aus dem Lagerbehälter in eine Förderrichtung quer zu ihren Drehachsen zu fördern. Ferner betrifft die Erfindung ein Verfahren, bei dem in solch einem Lagerbehälter aufgenommenes, in sich verzahntes Schüttgut mittels der Stachelwellen aus dem Lagerbehälter ausgetragen wird.

Die Stachelwellen sind so angeordnet, dass sie für den Austrag von oben in das Schüttgut eingreifen. Die Stachelwellen tauchen an der oberen, freien Oberfläche der in dem Lagerbehälter gebildeten Schüttgutsäule in das Schüttgut ein und müssen daher entsprechend ihrer Eintauchtiefe lediglich eine oberste Schicht der Schüttgutpartikel aus dem Schüttguthaufen herausreißen. Da der Schüttguthaufen von oben durch die Tätigkeit der Stachelwellen nach und nach abgetragen wird, greifen bzw. tauchen die Stachelwellen stets in eine vergleichsweise lockere Oberschicht in der Dicke der Eintauchtiefe ein. Durch diesen Eingriff und das Herausreißen der Schüttgutpartikel wird die nächste Schicht unterhalb der momentanen Eintauchtiefe bereits gelockert. Bei fortschreitendem Abtrag der Schüttgutsäule ist auch in dem unteren Bereich des Lagerbehälters, wo die Druckkräfte am größten und dadurch die Verzahnung am stärksten ist, ein Herausreißen des Schüttguts möglich, bei dem im Vergleich zu herkömmlichen Verfahren die durch das Herausreißen zwischen den Schüttgutpartikeln wirkenden Kräfte geringer sind. Das Herausreißen der Schüttgutpartikel gestaltet sich durch die Erfindung als ein schonendes Herausheben und dosiertes Abtragen.

Die Stachelwellen fördern das Schüttgut vorzugsweise in ein Fallrohr, das in Förderrichtung von den Stachelwellen angeordnet ist. Das Fallrohr weist eine obere Öffnung auf, durch die eine in Förderrichtung der Stachelwellen zweckmäßigerweise letzte Stachelwelle das Schüttgut in das Fallrohr fördert. Das Fallrohr ist vorzugsweise nach oben offen, d.h. die obere Öffnung wird ganz einfach durch die Innenquerschnittsfläche eines oberen Endes des Fallrohrs gebildet. Grundsätzlich könnte die obere Öffnung jedoch auch eine Seitenöffnung im Fallrohr sein.

Das Fallrohr erstreckt sich vorzugsweise durch die Schüttgutsäule. Es ist in dieser Anordnung so ausgebildet, dass es das im Fallrohr vorzugsweise vollkommen frei fallende Schüttgut von der umgebenden Schüttgutsäule abschirmt. Es weist daher vorzugsweise über seine durch die Schüttgutsäule sich erstreckende Länge bzw. Höhe einen geschlossenen, d.h. nicht durchbrochenen, Rohrmantel auf, der an seiner Außenseite vorzugsweise glatt ist und vorzugsweise auch an seiner Innenseite.

Falls das Fallrohr oder stattdessen eine andere geeignete Austragseinrichtung, die das Schüttgut durch die Schüttgutsäule austrägt, die Schüttgut bis in einen zentralen Bereich ihrer freien, oberen Oberfläche durchragt, vorzugsweise bis genau in das Zentrum der Oberfläche, wird als weiterer Vorteil ein kurzer Transportweg des Schüttguts quer zu der freien, oberen Oberfläche erhalten.

Dieser Vorteil kommt grundsätzlich auch in Verbindung mit anderen Förderern als Stachelwellen zum Tragen, beispielsweise in Verbindung mit dem für den Abtrag der Schüttgutsäule grundsätzlich ebenfalls geeigneten Typ des Kratzförderers. Solch ein Kratzförderer weist eine Mehrzahl von Kratzern auf, die von einer Zugeinrichtung des Kratzförderers entlang der freien, oberen Oberfläche der Schüttgutsäule gezogen werden, um das Schüttgut von einer Peripherie der Oberfläche in Richtung auf das Zentrum der Oberfläche, nämlich zu der Austragseinrichtung, zu fördern. Da die Kratzer das Schüttgut nicht über die gesamte Oberfläche, sondern lediglich von der Peripherie bis maximal zum Zentrum der Oberfläche fördern, wird die Last der Zugeinrichtung gegenüber einer Förderung über die gesamte Oberfläche deutlich verringert. Wegen der von der Zugeinrichtung aufzubringenden Kraft, die trotz der Reduzierung der Länge des Förderwegs noch beträchtlich sein kann, wird im Falle der Anordnung eines Kratzförderers oder mehrerer Kratzförderer eine mehrsträngige Zugeinrichtung gegenüber einer nur einsträngigen Zugeinrichtung bevorzugt. Eine aus Stachelwellen gebildete Abtragseinrichtung hat jedoch gegenüber einem Kratzförderer den großen Vorteil, dass der Abtrag des Schüttguts genauer dosiert werden kann. Obgleich technisch aufwendig, soll dennoch nicht ausgeschlossen werden, dass in Förderrichtung gesehen ein Abtrag der Schüttgutsäule durch eine Kombination von Stachelwellen mit einem Kratzförderer vorgesehen ist.

Die Stachelwellen sind vorzugsweise gemeinsam in einem Gestell um ihre Drehachsen drehbar gelagert. Das Gestell ist in dem Lagerbehälter absenkbar angeordnet, um durch die Kombination der Förderung quer zu den Drehachsen der Stachelwellen und die Senkbewegung der Stachelwellen die Schüttgutsäule abzutragen. Für ein Befüllen des Lagerbehälters ist das Gestell vorzugsweise anhebbar, wobei es bis in eine obere Endposition entweder vor dem Befüllen oder vorzugsweise allmählich während dem Befüllen und stets über dem ansteigenden Schüttguthaufen angehoben werden kann.

Das Gestell ist vorzugsweise um eine vertikale Schwenkachse schwenkbar in dem Lagerbehälter gelagert. Vorzugsweise ermöglicht die Schwenklagerung eine um 360° um die Schwenkachse umlaufende Schwenkbewegung. Die Schwenkbewegung zum Abtragen des Schüttguthaufens kann daher vorteilhafterweise eine Drehbewegung in eine einzige Drehrichtung sein. Falls sich durch den Schüttguthaufen ein Fallrohr erstreckt, wird die Schwenkbewegung um das Fallrohr ausgeführt, so dass die Schwenkachse eine Längsachse des Fallrohrs, vorzugsweise dessen Mittellängsachse ist. Das Stachelwellengestell kann die Schwenkbewegung relativ zu dem Fallrohr ausführen oder mit einem Fallrohrende um die Schwenkachse nicht verdrehbar verbunden sein.

Das Fallrohr ist vorzugsweise längenveränderbar und wird bei einer Senkbewegung der Stachelwellen verkürzt und vor oder während dem Befüllen, vorzugsweise durch eine Hebebewegung der Stachelwellen, verlängert. Zum Erhalt der Längenveränderbarkeit ist das Fallrohr vorzugsweise als Teleskoprohr gebildet, das wenigstens zwei axial ineinander schiebbare, vorzugsweise axial aneinander geführte Rohrsegmente umfasst. Das Teleskoprohr kann in einer einfachsten Ausführung von lediglich zwei Rohrsegmenten gebildet werden, von denen ein unteres in dem Lagerbehälter feststeht und ein oberes relativ zu dem unteren axial bewegbar ist. Bevorzugter umfasst das Teleskoprohr jedoch mehrere axial bewegbare Rohrsegmente, die axial ineinander schiebbar und jeweils paarweise aneinander geführt sind. Zweckmäßigerweise wird jedes der bewegbaren Rohrsegmente in das jeweils nächst untere Rohrsegment hineingeschoben. Bei Ausbildung der Rohrsegmente als kreiszylindrische Rohrsegmente ist ein Innendurchmesser des dünnsten Rohrsegments vorzugsweise wenigstens 500 mm, bevorzugter jedoch wenigstens 800 mm. Der Innendurchmesser erhöht sich sukzessive von Rohrsegment zu Rohrsegment um die Wandstärke des einzuschiebenden Rohrsegments und die Dicke eines umlaufenden Spalts zwischen den Rohrsegmenten. Die Länge der Rohrsegmente beträgt vorzugsweise wenigstens 1000 mm und höchstens 3000 mm. Die Rohrsegmente überlappen einander im eingefahrenen Zustand vorzugsweise gänzlich oder zumindest über den größeren Teil ihrer Längen.

Um das Fallrohr mit einer Geschwindigkeit zu verkürzen, die der Senkgeschwindigkeit der Stachelwellen bei dem Abtragen des Schüttguthaufens entspricht, kann ein oberes Ende des Fallrohrs, das die obere Öffnung bildet, mit dem die Stachelwellen drehbar lagernden Gestell mechanisch so verbunden sein, dass das Gestell das obere Ende des Fallrohrs bei der Senkbewegung der Stachelwellen mitnimmt. Hierfür würde es genügen, wenn das Gestell beispielsweise lose von oben auf das Fallrohr drückt. Vorzugsweise ist das Gestell jedoch mit dem die obere Öffnung des Fallrohrs bildenden Fallrohrende, das in der Ausbildung des Fallrohrs als Teleskoprohr ein oberes Rohrsegment ist, axial unbeweglich verbunden. Auf diese Weise nimmt das Gestell bei seiner Hebebewegung das Fallrohr ebenfalls mit, so dass die Senk- und Hebebewegung der Stachelwellen mit dem Verkürzen und dem Verlängern des Fallrohrs synchronisiert ist. In der Ausbildung als Teleskoprohr sind die Rohrsegmente für diese bevorzugte Art des Ausfahrens des Fallrohrs so miteinander verbunden, dass jedes der axial bewegbaren Rohrsegmente sein nächst unteres Nachbarsegment mitnimmt, falls mehrere axial bewegbare Rohrsegmente vorhanden sind.

In der bevorzugten Ausführung, in der die Stachelwellen in einem Gestell um eine Schwenkachse schwenkbar sind, umfasst das Gestell wenigstens zwei Gestellteile oder wird durch zwei Gestellteile gebildet, nämlich ein Senk- und Hebegestell und ein Schwenkgestell. In dem Schwenkgestell sind die Stachelwalzen um ihre Drehachsen drehbar gelagert. Das Schwenkgestell ist relativ zu dem Senk- und Hebegestell um die Schwenkachse schwenkbar. Das Schwenkgestell und das Senk- und Hebegestell werden entlang der Schwenkachse vorzugsweise gemeinsam bewegt, was zweckmäßigerweise durch eine mechanische Verbindung der beiden Gestellteile erreicht wird, die axiale Relativbewegungen zwischen den beiden Gestellteilen verhindert. Das Senk- und Hebegestell und das Schwenkgestell können insbesondere mittels eines reinen Drehgelenks miteinander verbunden sein, dessen Drehachse die Schwenkachse des Schwenkgestells ist.

Um ein aus der Schwenkbewegung der Stachelwellen sich ergebendes Reaktionsmoment aufzunehmen, wird das Senk- und Hebegestell an dem Lagerbehälter um die Schwenkachse nicht verdrehbar abgestützt. In der bevorzugten Ausführung, in der das Senk- und Hebegestell die Senk- und Hebebewegung der Stachelwellen mitmacht, wird es selbstverständlich an dem Lagerbehälter in Richtung der Senk- und Hebebewegung bewegbar abgestützt. Hierfür bildet der Lagerbehälter zweckmäßigerweise wenigstens eine Führungskurve, die sich in Richtung der Senk- und Hebebewegung der Stachelwellen, d.h. vorzugsweise vertikal, erstreckt. Das Senk- und Hebegestell bildet wenigstens ein Eingriffsglied, das bei der Hebe- und Senkbewegung von der wenigstens einen Führungskurve geführt wird, wobei durch den Führungseingriff gleichzeitig eine Drehbewegung des Senk- und Hebegestells relativ zu dem Lagerbehälter blockiert wird.

Das Eingriffselement ist vorzugsweise eine Rolle, die um eine Drehachse quer zu der Führungskurve drehbar an dem Senk- und Hebegestell gelagert ist. Um einem Verkanten des Senk- und Hebegestells vorzubeugen, sind vorzugsweise an dem Senk- und Hebegestell entlang der Führungskurve wenigstens zwei Eingriffselemente angeordnet. Die Führungskurve ist vorzugsweise eine Führungsschiene, kann grundsätzlich jedoch auch eine Führungsnut sein.

In dem Lagerbehälter können auch mehrere Schwenkgestelle der vorstehend beschriebenen Art vorgesehen sein, beispielsweise zwei in der Flucht angeordnete Schwenkgestelle oder drei, vier oder noch mehr Schwenkgestelle, die vorzugsweise gleichmäßig um ihre gemeinsame Schwenkachse verteilt angeordnet sind. Für Kratzförderer gilt das gleiche. Bei Anordnung mehrerer Schwenkgestelle ist es ferner grundsätzlich denkbar, dass wenigstens eines der Schwenkgestelle einen Kratzförderer und wenigstens ein anderes Stachelwellen lagert.

Ein Antrieb, mit dem die Stachelwellen für den Abtrag der Schüttgutsäule abgesenkt und für das Befüllen des Lagerbehälters vorzugsweise auch angehoben werden, ist vorzugsweise geregelt, könnte grundsätzlich jedoch auch lediglich gesteuert sein. Ein Motor des Antriebs wird so gesteuert oder vorzugsweise so geregelt, dass die Eintauchtiefe der Stachelwellen in den Schüttguthaufen während der Absenkbewegung der Stachelwellen konstant bleibt. Vorzugsweise wird die Eintauchtiefe indirekt mit Hilfe eines Abstandssensors erfasst, mit dessen Hilfe der vertikale Abstand ermittelt wird, den das Gestell von der darunter befindlichen Schüttgutsäule hat. Der Sensor umfasst einen Sender und einen Empfänger, um die Schüttgutsäule an ihrer Oberfläche abzutasten und ein reflektiertes Signal zu empfangen, aus dem eine Regelgröße für einen Motorregler oder eine Steuergröße für eine Motorsteuerung des Antriebs gebildet wird.

Die Stachelwellen sind in dem Lagerbehälter vorzugsweise hängend gehalten, d.h. ein Halteorgan des Senk- und Hebeantriebs ist ein Zugorgan, beispielsweise ein Drahtseil oder eine Kette. Andere Senk- und Hebemechanismen, beispielsweise ein hydraulischer Antrieb, kann grundsätzlich stattdessen eingesetzt werden.

Die vorstehenden Ausführungen zu der Förderung mittels Stachelwellen gelten grundsätzlich auch für einen Kratzförderer. So kann der Kratzförderer insbesondere mit der grundsätzlich gleichen Stellmechanik schwenkbar und senk- und hebbar angeordnet sein. Die Eintauchtiefe seiner Kratzer kann ebenso gesteuert oder vorzugsweise geregelt werden, wie vorstehend für die Stachelwellen beschrieben.

Durch die erfindungsgemäße Obenentnahme mit Hilfe von Stachelwellen, gegebenenfalls zusätzlich mit Hilfe eines Kratzförderers, in diesem Fall allerdings nur in Kombination mit einer zentralen Austragseinrichtung, ist die Lagerung von sich verzahnendem Schüttgut in Lagerbehältern möglich, die deutlich größer sind, als bei Verwendung der für diese Schüttgüter bislang bekannten Austragsvorrichtungen. Der Lagerbehälter einer erfindungsgemäßen Lagervorrichtung kann ein Lagervolumen von bis zu 80.000 m³ oder ein noch größeres Lagervolumen haben. Bevorzugt werden Lagervolumen zwischen 1.000 und 10.000 m³. Der Lagerbehälter bildet vorzugsweise einen kreiszylindrischen Lagerraum mit vertikaler Längsachse. Die Schüttgutsäule kann ohne weiteres 10m und höher sein.

Um den Betrieb zu verstetigen, werden wenigstens zwei erfindungsgemäße Lagervorrichtungen am Ort einer Lageranlage vorgesehen und in einer funktionell aufeinander abgestimmten Art und Weise betrieben. Dadurch kann insbesondere die eine der wenigstens zwei Lagervorrichtungen mit dem Schüttgut befüllt werden, während die andere, bereits zuvor befüllte Lagervorrichtung gleichzeitig entleert wird um durch einen Wechselbetrieb kontinuierlich zu befüllen und zu entleeren. Eine funktionelle Kopplung kann durch eine gemeinsame Eintragsvorrichtung und/oder einen gemeinsamen Abförderer gebildet werden. Insbesondere kann ein gemeinsamer Abförderer unter einem Fallrohr von jedem der Lagervorrichtungen vorgesehen sein.

Es genügt jedoch auch ein einzelner Lagerbehälter. Um den Betrieb eines Einzelbehälters zu verstetigen, können der Eintrag von Schüttgut in den Lagerbehälter und der Austrag aus dem Lagerbehälter aufeinander abgestimmt sein. Die Abstimmung kann insbesondere so sein, dass die Eintragsrate der Austragsrate des Schüttguts entspricht. Grundsätzlich ist auch denkbar, dass die Abtragsvorrichtung während des Abtrags langsam nach oben fährt, falls nämlich die Eintragsrate zeitweise größer ist als die Abtragsrate. Allerdings sollte bei einem Betrieb als Einzellagervorrichtung in vernünftigen Zeitabständen der Lagerbehälter auch einmal gänzlich entleert werden.

Ein Ausführungsbeispiel der Erfindung wird nachfolgend anhand von Figuren beschrieben. An dem Ausführungsbeispiel offenbar werdende Merkmal bilden je einzeln und in jeder Merkmalskombination die Gegenstände der Ansprüche vorteilhaft weiter. Es zeigen:
- Figur 1: ein Paar von Lagervorrichtungen mit teilweise befüllten Lagerbehältern,
- Figur 2: das Paar von Lagervorrichtungen der Figur 1 nach einer Entleerung des einen Lagerbehälters und einem Befüllen des anderen Lagerbehälters,
- Figur 3: eine vergrößerte Darstellung eines Teils von einer der Lagervorrichtungen der Figuren 1 und 2,
- Figur 4: die Lagervorrichtung der Figur 3 in einem Querschnitt,
- Figur 5: die Lagervorrichtung der Figur 3 in einer um 90° gedrehten Ansicht,
- Figur 6: die Lagervorrichtung in einem weiteren Querschnitt,
- Figur 7: ein Fallrohr der Lagervorrichtung in einem Längsschnitt und
- Figur 8: das Detail "X" der Figur 7.

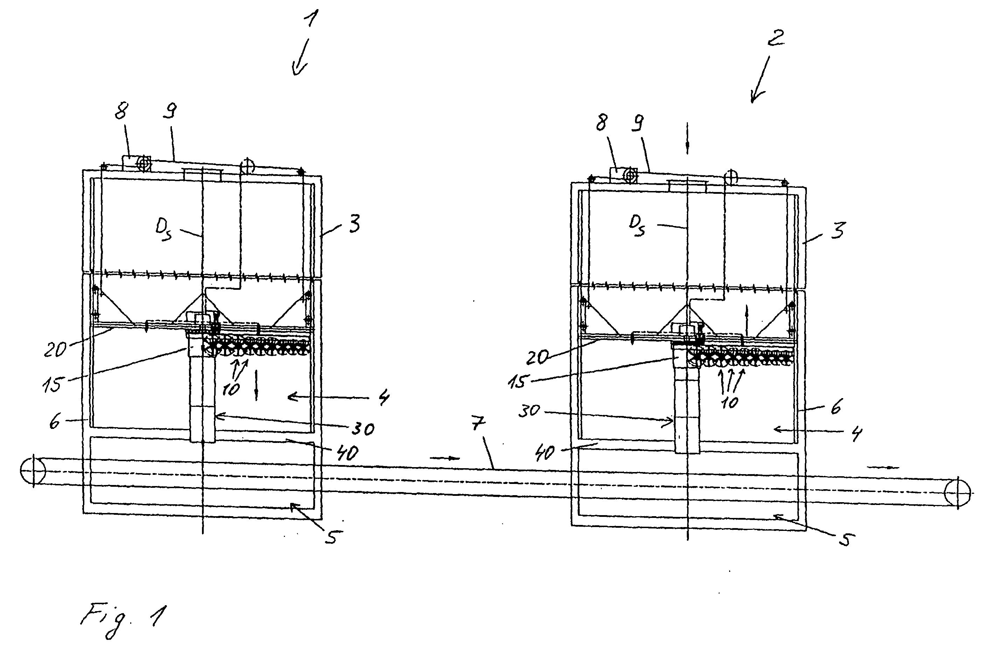

Figur 1 zeigt zwei Lagervorrichtungen 1 und 2, die im Wechsel aufeinander abgestimmt mit Schüttgut befüllt und entleert werden, um ein kontinuierliches An- und Abfördern von Schüttgut zu ermöglichen. Jede der beiden Lagervorrichtungen 1 und 2 ist ein Silo mit einem senkrecht stehenden, kreisringzylindrischen Lagerbehälter 3. Die Lagervorrichtungen 1 und 2 dienen zum Lagern von Schüttgut, das aus Schüttgutpartikeln besteht oder Schüttgutpartikel in einem größeren Umfang aufweist, die sich ineinander verzahnen, wie beispielsweise Späne für OSB-Platten. Die beiden Lagervorrichtungen 1 und 2 sind identisch ausgebildet, so dass im folgenden von dem abgestimmten Betrieb abgesehen nur stets eine der Lagervorrichtungen 1 und 2 stellvertretend auch für die andere beschrieben wird.

Der Lagerbehälter 3 bildet eine Art Keller 5 und vertikal darüber einen Lagerraum 4 für das Schüttgut. Der Lagerraum 4 und der Keller 5 sind durch einen Boden 40 voneinander getrennt. Das in dem Lagerraum 4 aufgenommenen Schüttgut ist von dem Boden 40 aus zu einer Schüttgutsäule aufgehäuft. Bei einer Entleerung der Lagervorrichtung 1 wird das Schüttgut auf einen Abförderer 7 gefördert und darauf aufliegend von der Lagervorrichtung abgefördert. Der Abförderer 7 kann, wie im Ausführungsbeispiel, insbesondere ein Endlosförderer, beispielsweise ein Bandförderer, sein. Der Abförderer 7 erstreckt sich durch den Keller 5 des Lagerbehälters 3 hindurch.

Der Abförderer 7 erstreckt sich ebenso durch den Keller 5 der weiteren Lagervorrichtung 2 und koppelt auf diese Weise die beiden Lagervorrichtungen 1 und 2 miteinander in dem Sinne, dass der gleiche Abförderer 7 bei Förderung in die in Figur 1 angezeigte Förderrichtung zur Entleerung der Lagervorrichtung 1 und bei Umkehr der Förderrichtung zur Entleerung der Lagervorrichtung 2 verwendet werden kann.

Um Schüttgut aus dem Lagerraum 4 auszutragen ist eine Austragevorrichtung aus Stachelwellen 10 und Fallrohr 30 vorgesehen. Die Stachelwellen 10 sind drehangetrieben und tauchen für die Entleerung des Lagerbehälters 3 mit ihren Stacheln in das Schüttgut ein. Sie tragen das Schüttgut an der freien, oberen Oberfläche der Schüttgutsäule ab und fördern es in ein Fallrohr 30. Das Schüttgut fällt frei durch das Fallrohr 30 und einen unteren Auslass des Fallrohrs 30 auf den Abförderer 7. Das Fallrohr 30 ragt von dem Boden 40 lotrecht auf und durchragt die Schüttgutsäule zentral, d.h. es ist zu der Innenmantelfläche der Seitenwand des Lagerbehälters 3 koaxial. Es bildet eine Vertikalfördereinrichtung, die auf der Schwerkraft beruht, indem das von den Stachelwellen 10 in das Fallrohr 30 geförderte Schüttgut in dem Fallrohr 30 im freien Fall nach unten fällt. Die Stachelwellen 10 bilden zusammen eine Abtragevorrichtung, die das Schüttgut an der Oberfläche der Schüttgutsäule nach und nach abträgt und quer zu dem Fallrohr 30 durch eine obere Einlassöffnung in das Fallrohr 30 fördert. Die Förderrichtung der Stachelwellen 10 weist quer zu den Drehachsen der Stachelwellen 10 und auch quer zu der Längsachse des Fallrohrs 30. Die Förderrichtung der Stachelwellen 10 ist ferner im Gesamten gesehen horizontal oder zumindest im wesentlichen horizontal. Während der Querförderung wird die Anordnung von Stachelwellen 10 um eine Schwenkachse D_{S}, die mit einer Mittellängsachse des Fallrohrs 30 und des Lagerraums 4 zusammenfällt, drehangetrieben, d.h. geschwenkt.

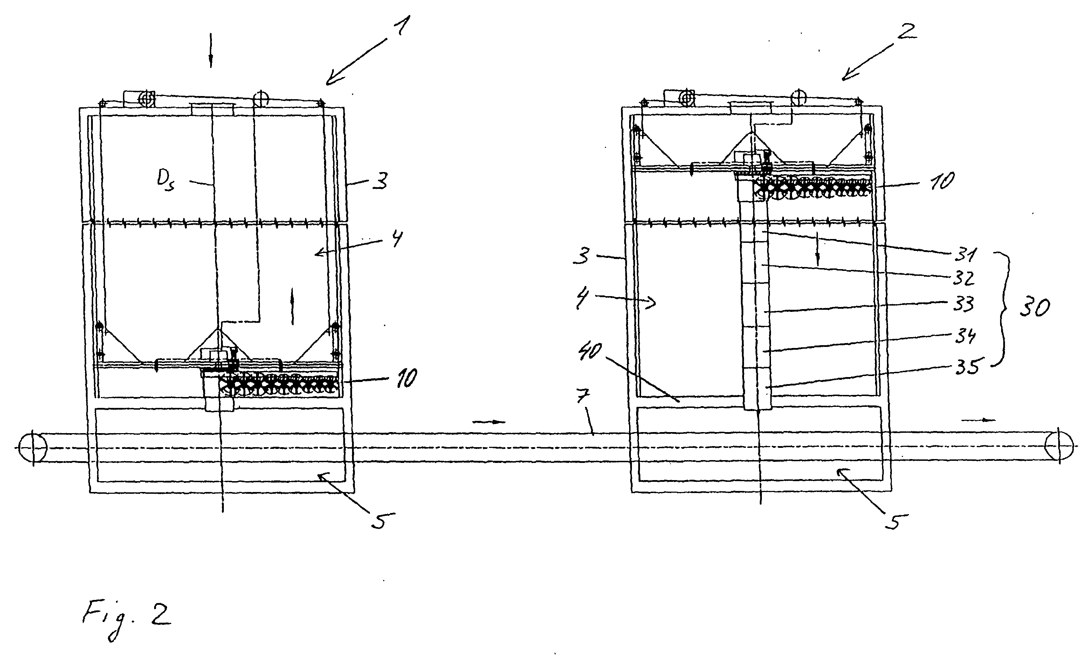

Die Figuren 1 und 2 veranschaulichen den Wechselbetrieb der beiden Lagervorrichtungen 1 und 2. Figur 1 zeigt die beiden Lagervorrichtungen 1 und 2 in einem Zustand während der Entleerung der Lagervorrichtung 1 und der Befüllung der Lagervorrichtung 2. Die Anordnung der Stachelwellen 10 der Lagervorrichtung 1 wird gerade abwärts bewegt, d.h. gesenkt, um den Schüttguthaufen nach und nach abzutragen. Zur gleichen Zeit wird der Lagerraum 4 der Lagervorrichtung 2 mit Hilfe einer nicht dargestellten Eintragsvorrichtung befüllt. Während der Befüllung wird die Anordnung der Stachelwellen 10 stets über der wachsenden Schüttgutsäule aufwärts bewegt. Die Senk- und Hebebewegungen der beiden Anordnungen von Stachelwellen 10 ist in Figur 1 durch vertikale Richtungspfeile kenntlich gemacht.

Figur 2 zeigt die Lagervorrichtung 1 nach vollständiger Entleerung und die Lagervorrichtung 2 nach vollständiger Befüllung und Umschaltung von Senk- und Hebeantrieben. Die Umkehrung der Richtungspfeile für die vertikale Bewegung der Stachelwellen 10 soll anzeigen, dass nun die Lagervorrichtung 1 für ein neues Befüllen und die Lagervorrichtung 2 für ein Entleeren bereit sind.

Aus den Figuren 1 und 2 ist ferner auch erkennbar, dass das Fallrohr 30 längenveränderbar ist. Während der Senkbewegung der Stachelwellen 10 wird das Fallrohr 30 verkürzt, und während der Hebebewegung wird es verlängert. Im Ausführungsbeispiel ist das Fallrohr 30 ein Teleskoprohr aus fünf Rohrsegmenten 31 bis 35, wie am besten bei der Lagervorrichtung 2 der Figur 2 zu sehen ist. Das unterste Rohrsegment 35 ist fest mit dem Boden 40 verbunden, beispielsweise mit dem Boden 40 verdübelt. Lotrecht unter dem Rohrsegment 35 verläuft der Abförderer 7. Das Rohrsegment 35 bildet ein Ausfallrohr, an dessen unteren Stirnseite das frei fallende Schüttgut aus dem Fallrohr 30 tritt und auf den Abförderer 7 fällt. Bei einer Verkürzung des Fallrohrs 30 wird von jeweils zwei im ausgefahrenen Zustand aufeinander folgenden Rohrsegmenten das obere Rohrsegment in das nächstfolgende untere Rohrsegment hineingeschoben, d.h. das oberste Rohrsegment 31 wird in das nach unten nächst folgende Rohrsegment 32 und zusammen mit diesem in das dann nächste Rohrsegment 33 und so weiter hineingeschoben, bis alle axial bewegbaren Rohrsegmente 31 bis 34 im komplett eingefahrenen Zustand des Fallrohrs 30 in das Ausfallrohr 35 hineingeschoben sind. Der vollkommen eingefahrene Zustand ist für die Lagervorrichtung 1 in Figur 2 dargestellt. Während dem Abtrag der Schüttgutsäule, d.h. während der Senkbewegung der Stachelwellen 10, muss natürlich sichergestellt sein, dass die Stachelwellen 10 stets in die Einlassöffnung des Fallrohrs 30 fördern. Dies bedeutet, dass die Senkbewegung der Stachelwellen 10 und die Verkürzung des Fallrohrs 30, im Ausführungsbeispiel dessen Einfahrbewegung, mit der gleichen Geschwindigkeit vorgenommen werden. Die Anordnung von Stachelwellen 10 ist dementsprechend mit dem obersten Rohrsegment 31 in Bezug auf die Längsachse des Fallrohrs 30 axial nicht bewegbar verbunden.

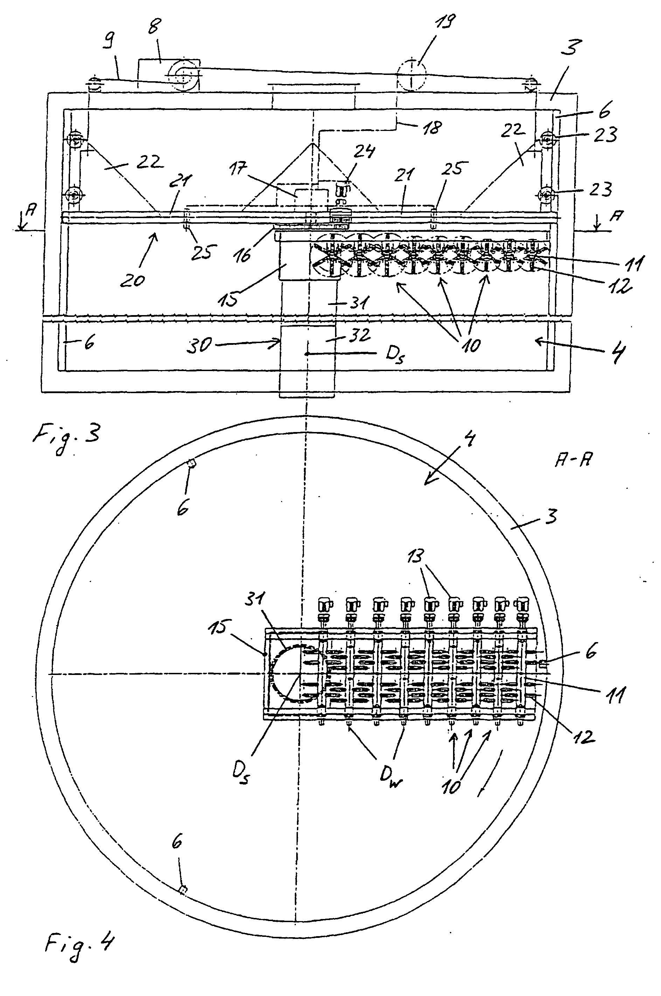

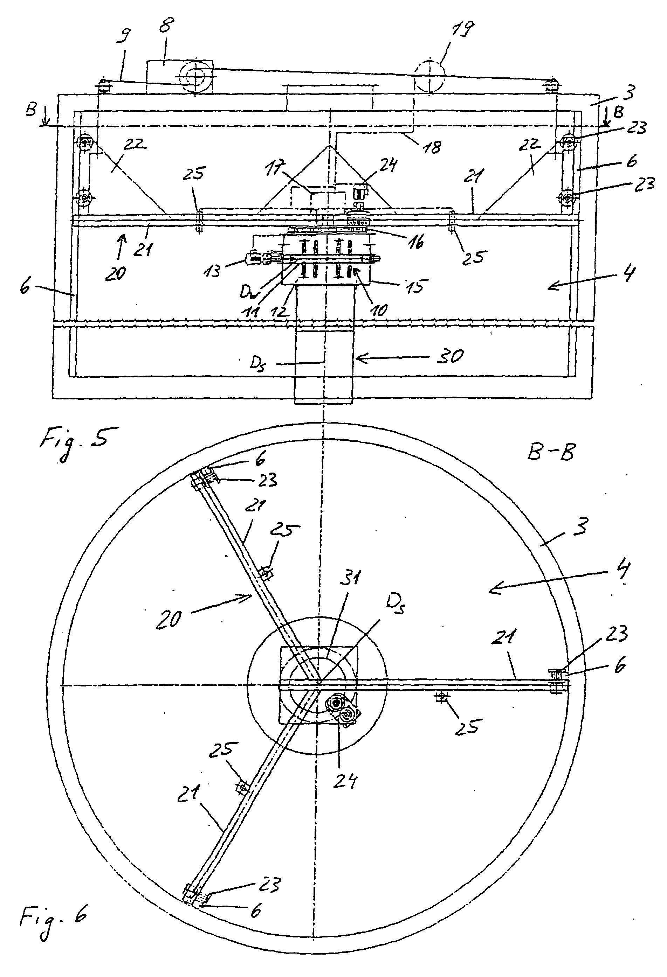

Die Figuren 3 bis 6 zeigen den oberen Teil der Lagervorrichtung 2 im Zustand der Figur 2, d.h. nach dem vollständigen Befüllen des Lagerbehälters 3 und vor Beginn des Austrags. Figur 3 ist eine vergrößerte Darstellung des oberen Teils der Lagervorrichtung 2 der Figur 2. Figur 4 zeigt dem Querschnitt A-A der Figur 3. Figur 5 zeigt den oberen Teil der Lagervorrichtung 2 in einer um 90° gegenüber Figur 2 und Figur 3 gedrehten Ansicht, und Figur 6 zeigt den Querschnitt B-B der Figur 5. Die Figuren 3 bis 6 zeigen insbesondere die Stachelwellen 10 und deren Anordnung im Lagerbehälter 3 in einem größeren Detail als die Figuren und 2. Allerdings sei bei der nachfolgenden Beschreibung stets auch auf die Figuren 1 und 2 verwiesen.

Die Stachelwellen 10 werden je von einer geraden Welle 11 in Form eines Rohrs und radial davon abragenden Stacheln 12 gebildet. Über den Umfang der Wellen 11 sind jeweils 6 Stacheln 12 gleichmäßig verteilt angeordnet, wie in Figur 3 zu erkennen ist. In axialer Richtung der Wellen 11 sind je 4 dieser "Stachelsterne" vorgesehen, so dass jede der Stachelwellen 11 vierundzwanzig Stacheln 12 aufweist. Die Stachelwellen 10 sind mit ihren Drehachsen D_{W} parallel nebeneinander in einer horizontalen Ebene und in ihrer Gesamtanordnung radial zu der Schwenkachse D_{S} des Fallrohrs 30 weisend angeordnet. In Richtung der Drehachsen D_{W} sind die Stacheln 12 von je zwei benachbarten Stachelwellen 10 zueinander versetzt so angeordnet, dass jede der Stachelwellen 10 mit ihren Stacheln 12 die Stacheln 12 der jeweils benachbarten Stachelwelle 10 überlappt, so das zwischen allen benachbarten Stachelwellen 10 jeweils ein kämmender Eingriff erhalten wird, wie am besten in Figur 4 zu erkennen ist.

Die Stacheln 12 werden je von einem geraden Rohrstück gebildet, das an seinem peripheren freien Ende zur Ausbildung einer Spitze abgeflacht ist. Der Durchmesser der Stachelwellen 10, gemessen als Durchmesser eines Hüllzylinders, der die Spitzen der Stacheln 12 einer Stachelwelle 10 berührend umgibt, nimmt in Förderrichtung der Stachelwellen 10 zu. Bei den Stachelwellen 10 des Ausführungsbeispiels weisen die Stachelwellen 10 einer äußeren Gruppe einen kleinsten gleichen Durchmesser, die Stachelwellen 10 einer mittleren Gruppe einen mittleren gleichen Durchmesser und die Stachelwellen 10 einer inneren Gruppe einen größten gleichen Durchmesser auf.

Die Stachelwellen 10 sind in einem Gestell um ihre Drehachsen D_{W} einzeln drehbar, um die Schwenkachse D_{S} gemeinsam schwenkbar und entlang der Schwenkachse D_{S} gemeinsam absenkbar und anhebbar gelagert. Das Gestell wird von einem Schwenkgestell 15 und einem Senk- und Hebegestell 20 gebildet. Jede der Stachelwellen 10 ist um ihre Drehachse D_{W} drehbar in dem Schwenkgestell 15 gelagert. Das Senk- und Hebegestell 20 ist in dem Lagerbehälter 3 entlang der Schwenkachse D_{S} absenkbar und anhebbar gelagert und an dem Lagerbehälter 3 so abgestützt, dass eine Drehbewegung des Senk- und Hebegestells 20 relativ zu dem Lagerbehälter 3 nicht möglich ist. Das Schwenkgestell 15 und das Senk- und Hebegestell 20 bilden miteinander ein Drehgelenk, dessen Drehachse die Schwenkachse Ds der Stachelwellen 10 ist. Das Schwenkgestell 15 und das Senk- und Hebegestell 20 sind ferner so miteinander verbunden, dass Bewegungen des Schwenkgestells 15 relativ zu dem Senk- und Hebegestell 20 entlang der Schwenkachse Ds nicht möglich sind, d.h. die Verbindung zwischen den Gestellen 15 und 20 ist ein reines Drehgelenk. Eines der beiden Gestelle 15 und 20 bildet einen Gelenkzapfen und das andere bildet eine Gelenkbuchse des Drehgelenks. Von dem das Gelenkelement bildenden Teil des Schwenkgestells 15 ragen zwei Träger parallel voneinander beabstandet nach radial auswärts ab. Die beiden Träger bilden die links- und rechtsseitigen Drehlager für die Stachelwellen 10. An einem der Träger sind nebeneinander jeweils in Verlängerung der Drehachsen Dw Antriebsmotoren 13, vorzugsweise Elektromotoren, für die Stachelwellen 10 befestigt. Jede der Stachelwellen 10 wird von einem eigenen Motor 13 drehangetrieben. Ein gemeinsamer Antrieb, beispielsweise mittels Kette, wäre alternativ denkbar.

Die Drehrichtungen der Stachelwellen 10 sind gleich und am Beispiel der innersten Stachelwelle 10 in Figur 3 eingezeichnet. Die Drehrichtung ist derart, dass die in das Schüttgut eingetauchten Stacheln 12 mit ihren Spitzen in Förderrichtung, d.h. in Richtung auf das Fallrohr 30 zu, bewegt werden. Die Lage der Stachelwellen 10 ist während des Abtrags relativ zu dem darunter befindlichen Schüttgutsäule so, dass die Wellen 11 sich noch über dem Schüttgut befinden. Es tauchen, mit anderen Worten, die Stacheln 12 bis maximal zu den Wellen 11 in das Schüttgut ein, so dass die Länge der Stacheln 12, gemessen von den Spitzen zu den Wurzeln der Stacheln 12 an den Wellen 11, gleich der maximalen Eintauchtiefe ist.

Der Schwenkantrieb für die Stachelwellen 10 wird von einem Elektromotor 24 und einem Zahnradgetriebe gebildet. Der Elektromotor 24 ist an dem Senk- und Hebegestell 20 abgestützt. Das Getriebe umfasst ein von dem Elektromotor 24 drehangetriebenes Antriebszahnrad und ein mit dem Antriebszahnrad in einem Zahneingriff stehendes Abtriebszahnrad 16. Das Abtriebszahnrad 16 ist verdrehgesichert mit dem Schwenkgestell 15 verbunden. Im Ausführungsbeispiel bildet die Außenverzahnung eines Großwälzlagers das Abtriebszahnrad 16. Das Großwälzlager bildet gleichzeitig auch das Drehgelenk zwischen dem Schwenkgestell 15 und dem Senk- und Hebegestell 20.

Das Senk- und Hebegestell 20 weist drei horizontale, gerade Stützarme 21 auf, die sich um die Schwenkachse D_{S} um 120° zueinander versetzt bis nahe zu der Seitenwand des Lagerbehälters 3 erstrecken. An dem äußeren Ende jedes der Stützarme 21 ist ein Haltestück 22 vollkommen steif befestigt, das sich von seinem Stützarm 21 aus vertikal erstreckt. An den Haltestücken 22 ist ein Drahtseil 9 eines Windenmotors 8 befestigt. Der Motor 8 ist an einem Dach des Lagerbehälters 3 abgestützt. Die Seilwinde aus Motor 8 und Drahtseil 9 bildet einen Senk- und Hebeantrieb für die Stachelwellen 10. Das Senk- und Hebegestell 20 und das Schwenkgestell 15 hängen an dem Drahtseil 9. Indem das oberste Rohrsegment 31 des Fallrohrs 30 mit dem Schwenkgestell 15 entlang der Schwenkachse Ds nicht bewegbar verbunden ist, bildet die Seilwinde 8, 9 gleichzeitig auch einen Ein- und Ausfahrantrieb für das Fallrohr 30.

An jedem der Haltestücke 22 sind ferner vertikal voneinander beabstandet zwei Rollen 23 um zu der Seitenwand des Lagerbehälters 3 tangentiale Drehachsen drehgelagert. Die Rollen 23 stehen, wie am besten in Figur 6 erkennbar, mit geraden, vertikalen Führungsschienen 6 in Eingriff, die an der Innenmantelfläche der Seitenwand des Lagerbehälters 3 befestigt sind. Die Führungsschienen 6 sind im Ausführungsbeispiel Vierkantrohre. Durch den Eingriff der Rollen 22 mit den Führungsschienen 6 wird eine Verdrehsicherung für das Senk- und Hebegestell 20 gebildet, um ein Reaktionsmoment abzustützen, das bei einer Schwenkbewegung des Schwenkgestells 15 auf das Senk- und Hebegestell 20 wirkt.

An jedem der Stützarme 21 ist ein Ultraschallsensor 25 befestigt, der als Abstandssensor für einen Regler des Motors 8 verwendet wird. Der Motor 8 wird nämlich bei dem Absenken der Stachelwellen 10 auf Einhaltung einer vorgegebenen Eintauchtiefe der Stacheln 12 in die Schüttgutsäule geregelt angetrieben. Bei dem Befüllen des Lagerbehälters 3 wird der Motor 8 auf Einhaltung eines vorgegebenen Abstands der Stacheln 12 von der wachsenden Schüttgutsäule geregelt angetrieben. In beiden Antriebsfällen, nämlich dem Absenken und dem Anheben der Stachelwellen 10 wird mittels der Sensoren 25 die Oberfläche der Schüttgutsäule abgetastet und daraus der Abstand der Sensoren 25 von dem Schüttgut ermittelt, um hieraus die Regelgröße für den Regler des Motors 8 zu bilden. Dem Regler des Motors 8 wird diese Regelgröße zusammen mit einer vorgegebenen Führungsgröße aufgeschaltet. Der Regler bildet die Stellgröße für den Motor 8 in Abhängigkeit von der Differenz aus Führungsgröße und Regelgröße. Aus der Eintauchtiefe der Stacheln 12, der Senkgeschwindigkeit, der Drehzahl und dem Durchmesser der Stachelwellen 10 sowie der Winkelgeschwindigkeit des Schwenkgestells 15 ergibt sich die Schüttgutmenge, die pro Zeiteinheit in das Fallrohr 30 gefördert wird. Entsprechend kann die pro Zeiteinheit geförderte Schüttgutmenge durch Variation von einem oder mehreren dieser Parameter wunschgemäß variiert werden.

Der Vollständigkeit wegen sei darauf hingewiesen, dass in gestrichelten Linien die Stromversorgung für die Motoren 13, den Schwenkmotor 23 und die Sensoren 25 eingezeichnet ist. Die Stromzufuhr erfolgt über ein Kabel 18, von dem Abzweigungen zu dem Motor 23 und den Sensoren 25 führen. Die Motoren 13 werden über einen Schleifkontakt versorgt, der zwischen dem Kabel 18 und einem Schleifkörper 17 gebildet ist. Die Schleifkörper 17 ist an dem Schwenkgestell 15 befestigt. Eine Kabeltrommel 19 ist an dem Dach des Lagerbehälters 3 befestigt und wickelt das Kabel 18 bei einem Senken der Stachelwellen 10 gegen eine rückstellende Federkraft ab und bei dem Heben der Stachelwellen 10 aufgrund der Federkraft selbsttätig wieder auf.

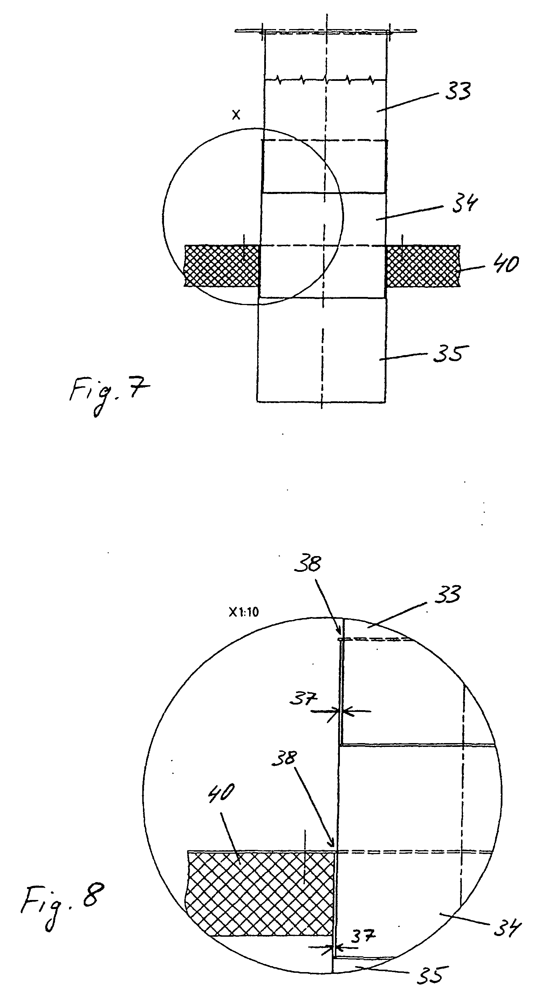

Figur 7 zeigt das Ausfallrohr 35 und die beiden nächstfolgende Rohre 34 und 33. Figur 8 zeigt das in Figur 7 eingetragene Detail "X".

Das Ausfallrohr 35 erstreckt sich durch den Boden 40 und ist an dem Boden 40, wie bereits erwähnt, festgedübelt. Seine untere, offene Stirnseite bildet die Ausfallöffnung des Fallrohrs 30. Das nächste Rohrsegment 34 ist in das Ausfallrohr 35 axial einfahrbar. Die beiden Rohrsegmente 34 und 35 weisen zwischen sich einen umlaufenden Ringspalt 37 einer bestimmten Weite auf. Der Ringspalt 37 ist an dem oberen Ende des Ausfallrohrs 35 verengt und dort mit 38 bezeichnet. Er weist über seine gesamte übrige, überlappende Länge der beiden Rohrsegmente 34 und 35 eine konstante Weite auf, die vorzugsweise wenigstens 5 mm und höchstens 50 mm beträgt. Durch den engeren Spalt 38, der eine Weite von vorzugsweise wenigstens 0.5 und höchstens 5 mm aufweist, wird bewirkt, dass Schüttgut, welches sich bei dem Absenken der Stachelwellen 10 durch den oberen engen Spalt 38 gezwängt hat, durch den anschließend weiteren Spalt 37 nach unten herausfallen kann. Ferner ragen von der Außenmantelfläche des inneren Rohrsegments 34 Abstandhalter ab, die die axiale Geradführung der Rohrsegmente 34 und 35 aneinander verbessern. Die weiteren Rohrsegmente weisen die gleiche Form von Spalten 37 und 38 und Abstandshalter zwischen sich auf.

### Bezugszeichen

- 1: Lagervorrichtung
- 2: Lagervorrichtung
- 3: Lagerbehälter
- 4: Lagerraum
- 5: Keller
- 6: Führungskurve, Schiene
- 7: Abförderer
- 8: Motor
- 9: Seil
- 10: Stachelwelle
- 11: Welle
- 12: Stachel
- 13: Motor
- 14: -
- 15: Schwenkgestell
- 16: Zahnrad
- 17: Schleifkörper
- 18: Stromkabel
- 19: Kabeltrommel
- 20: Hebe- und Senkgestell
- 21: Stützarm
- 22: Haltestück
- 23: Eingriffselement, Rolle
- 24: Motor
- 25: Abstandssensor
- 26: -
- 27: -
- 28: -
- 29: -
- 30: Fallrohr
- 31: Rohrsegment
- 32: Rohrsegment
- 33: Rohrsegment
- 34: Rohrsegment
- 35: Rohrsegment, Ausfallrohr
- 36: -
- 37: Spalt
- 38: Spalt
- 39: -
- 40: Boden
- D_{W}: Drehachse der Stachelwelle
- D_{S}: Schwenkachse, Längsachse, Vertikale

## Patentansprüche

1. Lagervorrichtung für in sich verzahnendes Schüttgut, umfassend:
a) einen Lagerbehälter (3),
b) eine Eintragsvorrichtung zum Befüllen des Lagerbehälters (3) mit dem Schüttgut
c) und eine in dem Lagerbehälter (3) angeordnete Abtragseinrichtung, die für einen Austrag des Schüttguts aus dem Lagerbehälter (3) von oben in das Schüttgut eingreift,
**dadurch gekennzeichnet, dass**
d) die Abtragseinrichtung um ihre Drehachsen (D_{w}) drehangetriebene Stachelwellen (10) umfasst, die so angeordnet sind, dass sie für den Austrag von oben in das Schüttgut eingreifen und kämmend ineinander greifen, um das Schüttgut für einen Austrag aus dem Lagerbehälter (3) in eine Förderrichtung quer zu ihren Drehachsen (D_{w}) zu fördern,

2. Lagervorrichtung nach Anspruch 1, **dadurch gekennzeichnet, dass** eine Austragseinrichtung, die vorzugsweise von einem Fallrohr (30) gebildet wird, der Höhe nach eine in dem Lagerbehälter (3) gebildete Schüttgutsäule bis in einen zentralen Bereich einer freien, oberen Oberfläche der Schüttgutsäule durchragt und dass die Förderrichtung der Stachelwellen (10) von einer Peripherie der Schüttgutsäule entlang der freien, oberen Oberfläche zu der Austragseinrichtung weist.

3. Lagervorrichtung nach Anspruch 1 oder 2, **dadurch gekennzeichnet, dass** eine in Förderrichtung von der Stachelwellen (10) angeordnete Austragseinrichtung ein Fallrohr (30) ist, in das die Stachelwellen (10) das Schüttgut fördern.

4. Lagervorrichtung nach dem vorhergehenden Anspruch, **dadurch gekennzeichnet, dass** das Fallrohr (30) längenveränderbar ist, um seine Höhe einer Höhe der in dem Lagerbehälter (3) aufgenommenen Schüttgutsäule anzupassen.

5. Lagervorrichtung nach dem vorhergehenden Anspruch, **dadurch gekennzeichnet, dass** das Fallrohr (30) axial ineinander schiebbare Rohrsegmente (31-35) umfasst, die einander bei einem Verkürzen des Fallrohrs (30) mitnehmen, so dass ein Teleskoprohr gebildet wird, wobei die axial bewegbaren Rohrsegmente (31-34) einander vorzugsweise auch bei einem Ausfahren des Fallrohrs (30) mitnehmen.

6. Lagervorrichtung nach einem der Ansprüche 2 bis 5, **dadurch gekennzeichnet, dass** die Stachelwellen (10) in dem Lagerbehälter (3) senkbar angeordnet sind und die Austragseinrichtung längenveränderbar ist, um sie bei einer Senkbewegung der Stachelwellen (10) zu verkürzen.

7. Lagervorrichtung nach dem vorhergehenden Anspruch, **dadurch gekennzeichnet, dass** die Stachelwellen (10) in einem absenkbaren Gestell (15, 20) um ihre Drehachsen (D_{w}) drehbar gelagert sind und ein Ende der Austragseinrichtung, das eine obere Öffnung der Austragseinrichtung bildet, durch die die Stachelwellen (10) das Schüttgut in die Austragseinrichtung fördern, mit dem Gestell (15, 20) so verbunden ist, dass das Gestell (15, 20) bei einer Senkbewegung das Ende der Austragseinrichtung mitnimmt, um die Austragseinrichtung zu verkürzen.

8. Lagervorrichtung nach einem der Ansprüche 2 bis 7, **dadurch gekennzeichnet, dass** unter der Austragseinrichtung ein Abförderer (7) angeordnet ist, um das Schüttgut abzufördern.

9. Lagervorrichtung nach einem der vorhergehenden Ansprüche, **dadurch gekennzeichnet, dass** die Stachelwellen (10) in einem Gestell (15, 20) um ihre Drehachsen (D_{w}) drehbar gelagert sind und das Gestell (15, 20) in dem Lagerbehälter (3) absenk- und anhebbar angeordnet ist.

10. Lagervorrichtung nach dem vorhergehenden Anspruch, **dadurch gekennzeichnet, dass** das Gestell (15, 20) ein Senk- und Hebegestell (20) und ein Schwenkgestell (15) umfasst, die gemeinsam absenk- und anhebbar sind, und dass das Senk- und Hebegestell (20) das Schwenkgestell (15) um eine Schwenkachse (Dₛ) schwenkbar und das Schwenkgestell (15) die Stachelwellen (10) um ihre Drehachsen (D_{w}) drehbar lagert.

11. Lagervorrichtung nach dem vorhergehenden Anspruch, **dadurch gekennzeichnet, dass** das Senk- und Hebegestell (20) an dem Lagerbehälter (3) um die Schwenkachse (Dₛ) nicht verdrehbar abgestützt ist, um ein für die Schwenkbewegung des Schwenkgestells (15) erforderliches Reaktionsmoment aufzunehmen.

12. Lagervorrichtung nach dem vorhergehenden Anspruch, **dadurch gekennzeichnet, dass** die verdrehgesicherte Abstützung des Senk- und Hebegestells (20) von wenigstens einer in Richtung der Senk- und Hebebewegung des Senk- und Hebegestells (20) sich erstreckenden Führungskurve (6) und wenigstens einem entlang der Führungskurve (6) geführten Eingriffselement (22) gebildet wird, wobei die Führungskurve (6) vorzugsweise mit einer Seitenwand des Lagerbehälters (3) und das Eingriffselement (22) vorzugsweise mit dem Senk- und Hebegestell (20) um die Schwenkachse (Dₛ) nicht verdrehbar verbunden sind.

13. Lagervorrichtung nach einem der vier vorhergehenden Ansprüche, **dadurch gekennzeichnet, dass** die Lagervorrichtung einen Senk- und Hebeantrieb mit wenigstens einem Motor (8) umfasst, der mit dem Gestell (15, 20) gekoppelt ist, um das Gestell (15, 20) für den Austrag des Schüttguts abzusenken und für das Befüllen des Lagerbehälters (3) anzuheben.

14. Lagervorrichtung nach dem vorhergehenden Anspruch, **dadurch gekennzeichnet, dass** der Senk- und Hebeantrieb ein Windenantrieb (8, 9) ist.

15. Lagervorrichtung nach einem der zwei vorhergehenden Ansprüche, **dadurch gekennzeichnet, dass** der Senk- und Hebeantrieb einen Regler oder eine Steuerung für den wenigstens einen Motor (8) und wenigstens einen Abstandssensor (25) umfasst, der einen vertikalen Abstand erfasst, den ein die Stachelwellen (10) lagerndes Gestell (15, 20) zu dem Schüttgut aufweist, und dass der Abstand zur Bildung einer Stellgröße für den wenigstens einen Motor (8) dem Regler als Regelgröße oder der Steuerung als Steuergröße aufgegeben wird.

16. Lagervorrichtung nach einem der vorhergehenden Ansprüche, **dadurch gekennzeichnet, dass** eine Geschwindigkeit, mit der die Stachelwellen (10) für den Austrag des Schüttguts abgesenkt werden, in Abhängigkeit von einer durch Messung ermittelten Eintauchtiefe der Stachelwellen (10) in das Schüttgut eingestellt wird.

17. Lageranlage mit wenigstens zwei Lagervorrichtungen nach einem der vorhergehenden Ansprüche, die durch eine gemeinsame Eintragsvorrichtung und/oder einen gemeinsamen Abförderer (7) miteinander verbunden sind, um den Lagerbehälter (3) der einen Lagervorrichtung (1) und den Lagerbehälter (3) der wenigstens einen anderen Lagervorrichtung (2) im Wechsel befüllen und entleeren zu können.

18. Verfahren für ein Austragen von in sich verzahntem Schüttgut aus einem Lagerbehälter (3), bei dem eine in dem Lagerbehälter (3) angeordnete Abtragseinrichtung an einer freien oberen Oberfläche einer in dem Lagerbehälter (3) aus dem Schüttgut gebildeten Schüttgutsäule in die Schüttgutsäule eingreift und das Schüttgut entlang der Oberfläche zu einer Austragseinrichtung (30), vorzugsweise eine Vertikalfördereinrichtung (30), fördert, die das Schüttgut nach unten auf einen Abförderer (7) weiterleitet,
**dadurch gekennzeichnet, dass**
die Abtragseinrichtung Stachelwellen (10) umfasst, die kämmend ineinander greifen und das Schüttgut von oben eingreifend zu der Austragseinrichtung (30) fördern.

19. Verfahren nach dem vorhergehenden Anspruch, **dadurch gekennzeichnet, dass** das Schüttgut durch die Austragseinrichtung (30) fällt.

20. Verfahren nach einem der vorhergehenden Ansprüche, **dadurch gekennzeichnet, dass** die Austragseinrichtung (30) die Schüttgutsäule der Höhe nach bis in einen zentralen Bereich ihrer Oberfläche durchragt, so dass das Schüttgut an der Oberfläche der Schüttgutsäule nur von einer Peripherie der Oberfläche in den zentralen Bereich gefördert wird.

## Claims

1. A storage device for interlocking bulk goods, comprising:
a) a storage container (3);
b) a feeding device for filling said storage container (3) with said bulk goods;
c) and a carrying-off means arranged in the storage container (3) which engages with the bulk goods in order to withdraw the bulk goods from the storage container (3) from above,
**characterised in that**
d) said carrying-off means comprises spiked shafts (10) which are rotary driven about their rotational axes (D_{w}) and arranged such that they mate with each other to withdraw the bulk goods from above, in order to convey the bulk goods to be withdrawn from the storage container (3) in a conveying direction perpendicular to their rotational axes (D_{w}).

2. The storage device as set forth in claim 1, **characterised in that** a withdrawing means which is preferably formed by a fall-pipe (30) protrudes in terms of height through a column of bulk goods formed in the storage container (3) as far as a central region of a free upper surface of said column of bulk goods, and **in that** the conveying direction of the spiked shafts (10) points from a periphery of the column of bulk goods, along the free upper surface, to said withdrawing means.

3. The storage device as set forth in claim 1 or 2, **characterised in that** a withdrawing means arranged in the conveying direction of the spiked shafts (10) is a fall-pipe (30) into which the spiked shafts (10) convey the bulk goods.

4. The storage device as set forth in the preceding claim, **characterised in that** the fall-pipe (30) can be changed in length, in order to adjust its height to a height of the column of bulk goods accommodated in the storage container (3).

5. The storage device as set forth in the preceding claim, **characterised in that** the fall-pipe (30) comprises pipe segments (31-35) which can be axially slid into each other and which slave each other when the fall-pipe (30) is shortened, such that a telescopic pipe is formed, wherein said axially movable pipe segments (31-34) preferably also slave each other when the fall-pipe (30) is extended.

6. The storage device as set forth in any one of claims 2 to 5, **characterised in that** the spiked shafts (10) are arranged in the storage container (3) such that they can be lowered and the withdrawing means can be changed in length, in order to shorten it when the spiked shafts (10) are lowered.

7. The storage device as set forth in the preceding claim, **characterised in that** the spiked shafts (10) are mounted in a frame (15, 20) which can be lowered, such that they can be rotated about their rotational axes (D_{w}), and **in that** one end of the withdrawing means which forms an upper opening of the withdrawing means through which the spiked shafts (10) convey the bulk goods into the withdrawing means is connected to said frame (15, 20), such that when the frame (15, 20) is lowered, it slaves said end of the withdrawing means, in order to shorten the withdrawing means.

8. The storage device as set forth in any one of claims 2 to 7, **characterised in that** a withdrawing conveyor (7) is arranged beneath the withdrawing means, in order to withdraw the bulk goods.

9. The storage device as set forth in any one of the preceding claims, **characterised in that** the spiked shafts (10) are mounted in a frame (15, 20) such that they can rotate about their rotational axes (D_{w}) and said frame (15, 20) is arranged in the storage container (3) such that it can be lowered and raised.

10. The storage device as set forth in the preceding claim, **characterised in that** the frame (15, 20) comprises a lowering and rising frame (20) and a pivoting frame (15) which can be jointly lowered and raised, and **in that** said lowering and rising frame (20) mounts said pivoting frame (15) such that it can be pivoted about a pivoting axis (Dₛ) and the pivoting frame (15) mounts the spiked shafts (10) such that they can be rotated about their rotational axes (D_{w}).

11. The storage device as set forth in the preceding claim, **characterised in that** the lowering and rising frame (20) is supported on the storage container (3) such that it cannot rotate about the pivoting axis (Dₛ), in order to absorb a reaction moment necessary for the pivoting movement of the pivoting frame (15).

12. The storage device as set forth in the preceding claim, **characterised in that** the support, secured against rotation, of the lowering and rising frame (20) is formed by at least one guiding cam (6) extending in the direction of the lowering and rising movement of the lowering and rising frame (20) and at least one engaging element (22) guided along said guiding cam (6), wherein the guiding cam (6) is preferably connected to a side wall of the storage container (3) such that it cannot rotate about the pivoting axis (Dₛ), and said engaging element (22) is preferably connected to the lowering and rising frame (20) such that it cannot rotate about the pivoting axis (Dₛ).

13. The storage device as set forth in any one of the preceding four claims, **characterised in that** the storage device comprises a lowering and rising drive having at least one motor (8) which is coupled to the frame (15, 20), in order to lower the frame (15, 20) for withdrawing the bulk goods and to raise the frame (15, 20) for filling the storage container (3).

14. The storage device as set forth in the preceding claim, **characterised in that** said lowering and rising drive is a winch drive (8, 9).

15. The storage device as set forth in any one of the preceding two claims, **characterised in that** the lowering and rising drive comprises a regulator or a controller for said at least one motor (8) and at least one distance sensor (25) which detects a vertical distance between a frame (15, 20) which mounts the spiked shafts (10) and the bulk goods, and **in that** said distance is fed to said regulator as a regulating variable or to said controller as a controlling variable, to form a manipulated variable for the at least one motor (8).

16. The storage device as set forth in any one of the preceding claims, **characterised in that** a rate at which the spiked shafts (10) are lowered for withdrawing the bulk goods is set in accordance with a plunging depth of the spiked shafts (10) into the bulk goods, as determined by measurement.

17. A storage facility comprising at least two storage devices as set forth in any one of the preceding claims, connected to each other by a common feeding device and/or a common withdrawing conveyor (7), in order to be able to alternately fill and empty the storage container (3) of one storage device (1) and the container (3) of the at least one other storage device (2).

18. A method for withdrawing interlocking bulk goods from a storage container (3), wherein a carrying-off means arranged in said storage container (3) engages with the column of bulk goods on a free upper surface of a column of bulk goods formed in the storage container (3) from the bulk goods and conveys said bulk goods along said surface to a withdrawing means (30), preferably a vertical conveying means (30), which transfers the bulk goods downwards onto a withdrawing conveyor (7),
**characterised in that**
said carrying-off means comprises spiked shafts (10) which mate with each other and engage with the bulk goods from above and convey them to said withdrawing means (30).

19. The method as set forth in the preceding claim, **characterised in that** the bulk goods fall through the withdrawing means (30).

20. The method as set forth in any one of the preceding claims, **characterised in that** the withdrawing means (30) protrudes in terms of height through the column of bulk goods as far as a central region of its free upper surface, such that the bulk goods on the surface of the column of bulk goods are only conveyed into the central region from a periphery of the surface.

## Revendications

1. Dispositif d'entreposage pour des matières en vrac en particules qui s'accrochent les unes aux autres, qui comprend :
a) un conteneur d'entreposage (3),
b) un dispositif d'introduction pour remplir le conteneur d'entreposage (3) de matière en vrac,
c) et un dispositif d'extraction disposé dans le conteneur d'entreposage (3) qui engage la matière en vrac par le haut pour extraire la matière en vrac du conteneur d'entreposage (3),
**caractérisé en ce que**
d) le dispositif d'extraction comprend des arbres à picots (10) entraînés à rotation autour de leur axe de rotation (D_{W}) et qui sont disposés de telle sorte qu'ils s'engagent par le haut dans la matière en vrac pour l'extraire et qu'ils s'engrènent les uns dans les autres pour transporter la matière en vrac dans une direction de transport transversal par rapport à leur axe de rotation (D_{w}), pour l'extraire du conteneur d'entreposage (3).

2. Dispositif d'entreposage selon la revendication 1, **caractérisé en ce qu'**un dispositif d'extraction qui est de préférence formé par un tube de descente (30) traverse dans le sens de sa hauteur une colonne de matière en vrac formée dans le conteneur d'entreposage (3) jusqu'à une zone centrale de la surface supérieure libre de la colonne de matière en vrac et **en ce que** le dispositif de transport des arbres à picots (10) s'étend de la périphérie de la colonne de matière en vrac jusqu'au dispositif d'extraction en longeant sa surface supérieure libre.

3. Dispositif d'entreposage selon les revendications 1 ou 2, **caractérisé en ce qu'**un dispositif d'extraction disposé dans la direction du transport réalisé par les arbres à picots (10) est un tube de descente (30) dans lequel les arbres à picots (10) transportent la matière en vrac.

4. Dispositif d'entreposage selon la revendication précédente, **caractérisé en ce que** la longueur du tube de descente (30) peut être modifiée pour adapter sa hauteur à la hauteur de la colonne de matière en vrac reprise dans le conteneur d'entreposage (3).

5. Dispositif d'entreposage selon la revendication précédente, **caractérisé en ce que** le tube de descente (30) comporte des tronçons de tube (31-35) qui peuvent coulisser axialement les uns dans les autres qui s'entraînent l'un l'autre lorsque le tube de descente (30) est raccourci, de manière à former un tube télescopique, les tronçons de tube (31-34) qui peuvent être déplacés axialement s'entraînant mutuellement de préférence aussi lorsque le tube de descente (30) est déployé.

6. Dispositif d'entreposage selon l'une des revendications 2 à 5, **caractérisé en ce que** les arbres à picots (10) sont disposés dans le conteneur d'entreposage (3) de manière à pouvoir être abaissés et **en ce que** la longueur du dispositif d'extraction peut être modifiée pour la raccourcir lorsque les arbres à picots (10) exécutent un déplacement d'abaissement.

7. Dispositif d'entreposage selon la revendication précédente, **caractérisé en ce que** les arbres à picots (10) sont montés à rotation autour de leur axe de rotation (D_{W}) dans un bâti (15, 20) apte à être abaissé, et **en ce qu'**une extrémité du dispositif d'extraction qui forme une ouverture supérieure du dispositif d'extraction par laquelle les arbres à picots (10) transportent la matière en vrac dans le dispositif d'extraction est reliée au bâti (15, 20) de telle sorte que le bâti (15, 20) entraîne l'extrémité du dispositif d'extraction lors de son déplacement d'abaissement pour raccourcir le dispositif d'extraction.

8. Dispositif d'entreposage selon l'une des revendications 2 à 7, **caractérisé en ce qu'**en dessous du dispositif d'extraction est disposé un transporteur d'enlèvement (7) qui enlève la matière en vrac.

9. Dispositif d'entreposage selon l'une des revendications précédentes, **caractérisé en ce que** les arbres à picots (10) sont montés à rotation autour de leur axe de rotation (D_{W}) dans un bâti (15, 20) et **en ce que** le bâti (15, 20) est disposé dans le conteneur d'entreposage (3) de manière à pouvoir être abaissé et relevé.

10. Dispositif d'entreposage selon la revendication précédente, **caractérisé en ce que** le bâti (15, 20) comporte un bâti d'abaissement et de relèvement (20) et un bâti pivotant (15) qui peuvent être abaissés et relevés ensemble et **en ce que** le bâti d'abaissement et de relèvement (20) porte le bâti pivotant (15) de manière à ce qu'il puisse pivoter autour d'un axe de pivotement (D_{S}), le bâti pivotant (15) portant les arbres à picots (10) de manière à ce qu'ils puissent tourner autour de leur axe de rotation (D_{W}).

11. Dispositif d'entreposage selon la revendication précédente, **caractérisé en ce que** le bâti d'abaissement et de relèvement (20) est soutenu sur le conteneur d'entreposage (3) de manière à ne pas pouvoir tourner autour de l'axe de pivotement (D_{S}), pour reprendre le couple de réaction nécessaire pour le déplacement de pivotement du bâti pivotant (15).

12. Dispositif d'entreposage selon la revendication précédente, **caractérisé en ce que** le soutien à blocage de la rotation du bâti d'abaissement et de relèvement (20) est formé par au moins une courbe de guidage (6) qui s'étend dans la direction du déplacement d'abaissement et de relèvement du bâti d'abaissement et de relèvement (20) et par au moins un élément d'engagement (22) guidé le long de la courbe de guidage (6), la courbe de guidage (6) étant reliée de préférence à une paroi latérale du conteneur d'entreposage (3), l'élément d'engagement (22) étant relié de préférence au bâti d'abaissement et de relèvement (20) de manière à ne pas pouvoir tourner autour de l'axe de pivotement (D_{S}).

13. Dispositif d'entreposage selon l'une des quatre revendications qui précèdent, **caractérisé en ce que** le dispositif d'entreposage comprend un entraînement d'abaissement et de relèvement doté d'au moins un moteur (8) qui est accouplé au bâti (15, 20) pour abaisser le bâti (15, 20) en vue de l'extraction de la matière en vrac et pour le relever en vue du remplissage du conteneur d'entreposage (3).

14. Dispositif d'entreposage selon la revendication précédente, **caractérisé en ce que** l'entraînement d'abaissement et de relèvement est un entraînement par treuil (8, 9).

15. Dispositif d'entreposage selon l'une des deux revendications qui précèdent, **caractérisé en ce que** l'entraînement d'abaissement et de relèvement comprend un régulateur ou une commande pour l'au moins un moteur (8) et au moins une sonde de distance (25) qui détecte la distance verticale que le bâti (15, 20) qui monte les arbres à picots (10) présente par rapport à la matière en vrac et **en ce que** la distance est délivrée au régulateur comme grandeur de réglage ou à la commande comme grandeur de commande pour former une grandeur de commande pour l'au moins un moteur (8).

16. Dispositif d'entreposage selon l'une des revendications précédentes, **caractérisé en ce que** la vitesse à laquelle les arbres à picots (10) sont abaissés en vue de l'extraction de la matière en vrac est réglée en fonction de la profondeur de pénétration, déterminée par mesure, des arbres à picots (10) dans la matière en vrac.

17. Installation d'entreposage qui comprend au moins deux dispositifs d'entreposage selon l'une des revendications précédentes qui sont reliés mutuellement par un dispositif commun d'introduction et/ou un transporteur d'enlèvement (7) commun pour pouvoir remplir et vider en alternance le conteneur d'entreposage (3) de l'un des dispositifs d'entreposage (1) et le conteneur d'entreposage (3) de l'au moins un autre dispositif d'entreposage (2).

18. Procédé d'extraction de matière en vrac en particules qui s'accrochent les unes aux autres dans un conteneur d'entreposage (3), dans lequel un dispositif d'extraction disposé dans le conteneur d'entreposage (3) s'engage dans la surface supérieure libre de la colonne de matière en vrac formée par la matière en vrac présente dans le conteneur d'entreposage (3) et transporte la matière en vrac le long de cette surface vers un dispositif d'extraction (30), de préférence un dispositif (30) de transport vertical qui conduit la matière en vrac vers le bas sur un transporteur d'enlèvement (7), **caractérisé en ce que** le dispositif d'extraction présente des arbres à picots (10) qui s'accrochent les uns dans les autres et qui transportent la matière en vrac vers le dispositif d'extraction (30) en engageant par le haut.

19. Procédé selon la revendication précédente, **caractérisé en ce que** la matière en vrac tombe dans le dispositif d'extraction (30).

20. Procédé selon l'une des revendications précédentes, **caractérisé en ce que** le dispositif d'extraction (30) traverse la hauteur de la colonne de matière en vrac jusque dans une zone centrale de sa surface de telle sorte que la matière en vrac présente à la surface de la colonne de matière en vrac n'est transportée que de la périphérie de la surface jusque dans sa zone centrale.
